# EUROPEAN PATENT SPECIFICATION

(11) **EP 3 960 428 B1**
(45) Date of publication and mention of the grant of the patent: **14.06.2023**
(21) Application number: 20193450.2
(22) Date of filing: 28.08.2020
(51) Int. Cl.: B29C 65/78, B29C 65/48, B29C 65/00, B29L 31/08, F03D 1/06

(54) **A METHOD OF ASSEMBLING A WIND TURBINE ROTOR BLADE**
VERFAHREN ZUR MONTAGE EINER WINDTURBINENROTORSCHAUFEL
PROCÉDÉS DE MONTAGE DE PALE DE ROTOR D'ÉOLIENNE

(43) Date of publication of application: 02.03.2022
(73) Proprietor: Nordex Energy SE & Co. KG, 22419 Hamburg (DE)
(72) Inventor: Previtali, Francesco, 22525 Hamburg (DE); Rindt, Philipp, 18057 Rostock (DE)
(74) Representative: Hauck Patentanwaltspartnerschaft mbB

(56) References cited:
- WO-A1-2015/003717
- WO-A1-2017/045690
- WO-A1-2018/184644
- WO-A1-2018/224104
- WO-A1-2020/055398

## Description

The invention relates to a method of assembling a wind turbine rotor blade. The wind turbine rotor blade comprises three main components, namely a first half shell, a second half shell, and one or more shear webs. These three main components are manufactured based on fibre reinforced plastics materials, and are joined together by means of a reactive adhesive applied between the edges of the half shells, essentially along the leading and trailing edges of the wind turbine rotor blade, as well as between the shear web(s) and each of the half shells. To achieve the required quality of the wind turbine rotor blade, the correct positioning of the three main components and the stability of the adhesive joints is essential.

For assembling the three main components, it is well-known to proceed in two consecutive steps. In a first step, the shear web is positioned with a positioning device with reference to the first half shell and joined thereto by means of an adhesive. Once the adhesive has cured, in a second step the second half shell is joined to the first half shell and the shear web.

From the document EP 2 742 234 B1 it has become known to connect two shear webs to each other by means of cross-connecting devices. In this way, the shear webs form a package that can be placed as a whole within the first half shell, while the cross-connecting device ensures a proper, vertical orientation of the shear webs.

From the document DK 2016 70994 A1 it has become known to arrange two shear webs between first and second half shells of a wind turbine rotor blade, and to then provide a motive force on the shear webs in a substantially chordwise direction such that the bonding surfaces of the shear webs are moved towards the bonding surfaces of the blade shells and the adhesive is compressed therebetween.

From the document WO 2017/045690 A1 it has become known to use a positioning jig for placing a shear web in a defined position on a first half shell. The shear web is then maintained in its desired position by means of ligaments attached to the shear web and to the first half shell. In particular, the ligaments may be provided in the form of a length of rope put under tension.

From the document WO 2018/184644 A1 it has become known to hold a shear web of a wind turbine rotor blade in a desired position by means of different support elements. Some of the support elements are removed once both half shells are glued together, others remain within the wind turbine rotor blade.

From the document WO 2018/224104 A1 it has become known to hold a shear web in a desired position between two half shells of a wind turbine rotor blade with bars attached to a mould of the first half shell while the second half shell is lowered onto the first half shell. Just before the second half shell reaches its mounting position, an upper end of the shear web is guided by web flange locators arranged at the second half shell. At this point in time, the bars are removed.

From the document WO 2020/055398 A1 a method with the features of the preamble of claim 1 has become known. As a support for holding the shear web in the defined position, the document describes elongated struts having a first mount at one end which is connected to the shear web and a second mount at the other end which is connected to the first half shell. In a midsection of the struts, there is a frangible section, which fails under certain specific conditions. In some embodiments, the frangible section includes a phase change material that loses rigidity upon application of a catalyst. The specific condition can also be a load amount, localized temperature, or via application of a material that deteriorates the structural integrity of the frangible section.

Starting from the above, it is the object of the invention to provide an improved method of assembling a wind turbine rotor blade, in particular with regard to safety and ease-of-use of the at least one support.

This object is solved by the method of assembling a wind turbine rotor blade of claim 1. The method comprises the following steps:
- providing a first half shell, a second half shell, and a shear web,
- providing a reactive adhesive on a contact surface between the first half shell and the shear web,
- placing the shear web in a defined position with reference to the first half shell,
- arranging at least one support in a holding position in which it is holding the shear web in the defined position,
- providing a reactive adhesive on contact surfaces between the first half shell and the second half shell and between the second half shell and the shear web,
- placing the second half shell in a mounting position, curing the reactive adhesive,
- removing the at least one support, wherein
- for holding the shear web in the defined position, the at least one support has a first mounting surface which is attached to the shear web or to the first half shell by a thermoplastic adhesive, and
- for removing the at least one support, the thermoplastic adhesive is heated to a temperature which is equal to or higher than a softening temperature of the thermoplastic adhesive.

Each of the two half shells can extend in a lengthwise direction from a blade root to a blade tip, and in a chordwise direction from a leading edge to a trailing edge of the wind turbine rotor blade. One of the two half shells can comprise a pressure side, the other one of the two half shells a suction side of the wind turbine rotor blade.

Each of the half shells can be manufactured from a fibre-reinforced plastics material, in particular including glass and/or carbon fibres and a polymeric matrix material such as polyester or epoxy resin. Each of the half shells can be manufactured in a specific mould, in particular using a vacuum infusion process. Each of the half shells can include an aerodynamic skin and one or more structural elements, in particular one or more spar caps. The spar caps can be manufactured integrally with the aerodynamic skin. In the alternative, the spar caps can be manufactured in advance and then connected to the aerodynamic skin.

The shear web extends in a lengthwise direction of the rotor blade, in particular beginning at or close to the blade root and ending at or close to the blade tip. The shear web may extend over at least 50 % of the length of the wind turbine rotor blade, in particular over at least 75 % thereof. The shear web can be an essentially plate-shaped structure connecting the two half shells in a direction corresponding largely to a profile height. It is understood that the wind turbine rotor blade can include precisely one shear web, but also two or more shear webs, for example two shear webs arranged parallelly near a chordwise position with maximum profile height, thereby forming a box-shaped load-bearing structure. An additional shear web may be positioned near a trailing edge of the wind turbine rotor blade. If more than one shear web is used, only one of them may be assembled with the half shells in accordance with the inventive method, however, preferably, each of the shear webs can be assembled using the inventive method.

The shear web can be manufactured from a fibre-reinforced plastics material as well, in particular in a sandwich construction with a lightweight core material, such as a polymeric foam or balsa wood, enclosed between two layers of fibre-reinforced material. The shear web can be manufactured in a separate mould, if desired using a vacuum infusion process as well.

The shear web can include a first mounting flange facing the first half shell and a second mounting flange facing the second half shell. Each of the mounting flanges can include sections extending from a plane of a plate-shaped central section of the shear web towards the trailing edge and/or towards the leading edge of the wind turbine rotor blade. In cross-section, the shear web may thus be formed in particular C-shaped or I-shaped.

For connecting the three main components to each other, a reactive adhesive is used. The term "reactive adhesive" is used to distinguish the adhesive from the thermoplastic adhesive. The reactive adhesive cures based on a chemical reaction. The reactive adhesive establishes a strong bond between the three main components. Any suitable resin system may be used, in particular the same system used as a matrix material for the three main components, or any other reactive adhesive compatible therewith.

In accordance with the invention, the at least one support has a first mounting surface which is attached either to the shear web or to the first half shell by a thermoplastic adhesive. The thermoplastic adhesive, commonly referred to also as hot-melt glue, is an adhesive that softens and/or becomes liquid when it is heated at least to a certain temperature, herein referred to as softening temperature. The thermoplastic adhesive may be applied to a contact surface, e.g. the first mounting surface or to its counterpart, for example with a specific tool known as a hot-melt glue gun, or with any other suitable tool. When the thermoplastic adhesive cools down below its softening temperature and solidifies, the mounting surface is safely attached to the shear web or to the first half shell, respectively. This type of adhesive bonding may not offer the same stability as the reactive adhesive used for bonding the three main components of the rotor blade together, but the stability has proven sufficient for safely holding the shear web in its defined position when assembling the wind turbine rotor blade. Moreover, the application of a thermoplastic adhesive is easy and fast, and the required bonding of the first mounting surface is obtained in a relatively short time.

For removing the at least one support, the thermoplastic adhesive is heated to a temperature which is equal to or higher than the softening temperature of the thermoplastic adhesive, so that the first mounting surface can easily be detached from the component to which it has been attached. This process is also very easy to carry out and has the specific advantage that the entire support can easily be removed from the rotor blade, without applying excessive forces and without leaving any potentially harmful elements of the at least one support in the rotor blade.

Another advantage of the inventive method is that the element of the rotor blade to which the at least one support is attached to is not weakened, neither by any connection means, such as by drilling a hole, nor by breaking up an adhesive bond when removing the at last one support. Further, after having removed the at least one support, if any, only very little amounts of thermoplastic adhesive may remain on the surface of the respective counterpart in the rotor blade. These will add only negligible amounts of mass to the structure, and will leave the corresponding surface of the structural component intact.

The thermoplastic adhesive may have any suitable chemical composition. For many thermoplastic adhesives, there is no one well-defined melting point defining a transition between solid and fluid states of the material. Instead, a softening temperature can be defined as the temperature at which the thermoplastic adhesive softens beyond a certain selected softness. The softening temperature can be determined, for example, by the Vicat-method (ASTM-D1525 or ISO 306). The Vicat softening temperature is taken as the temperature at which a specimen of the thermoplastic adhesive is penetrated to a depth of 1 mm by a flat-ended needle with a 1 mm² circular or square cross-section, for example when a load of 10 N is used. With regard to the invention, the importance of the softening temperature lies in the fact that, when the thermoplastic adhesive is heated to a temperature higher than the softening temperature, the bond formed by the thermoplastic adhesive loses its strength to such an extent that the at least one support can easily be removed.

The steps of the inventive method need not necessarily be performed in the given order. For example, the reactive adhesive provided between the three main components of the rotor blade can be applied in any specific order and before or after placing the three components in their final positions. Also, curing of the reactive adhesive can be carried out in one or several steps, for example such that the reactive adhesive between the shear web and the first half shell is applied and cured before the second half shell is placed in the mounting position. However, the invention allows attaching of the at least one support in very short time, so that it is possible to place the at least one support in the holding position, then place the second half shell in the mounting position and then cure the reactive adhesive between all three main components simultaneously, thereby saving valuable mould time.

The invention can be carried out using any number of supports, for example one, two, three, four, or more than four supports, either of the same type or of different types.

In a chordwise direction, the supports may be arranged on one side or on both sides of the shear web. In a lengthwise direction, the supports may be distributed over the entire length of the shear web. In addition to the at least one support attached to and removed from the blade components based on the thermoplastic adhesive, any number of additional other support structures may be used for holding of the shear web in the defined position.

In an aspect of the invention, for curing the reactive adhesive, the wind turbine rotor blade is heated to a curing temperature which can be equal to or higher than the softening temperature of the thermoplastic adhesive. Many reactive adhesives require curing at an elevated temperature, typically in a temperature range of 60°C to 100°C, for example. For reaching and maintaining this temperature for a sufficient time, it is common practice to heat the entire wind turbine rotor blade in a specific environment. The inventors noticed that the curing phase can be used for removing the at least one support in a particularly easy manner, if the thermoplastic adhesive is selected having a softening temperature at or below the curing temperature. In this case, the at least one support self-detaches during curing of the wind turbine rotor blade. The inventors further realized that well before the softening temperature of the thermoplastic adhesive is reached in the curing step, the strength of the reactive adhesive bonds is sufficient to prevent the shear web from moving out of its defined position.

In an aspect of the invention, the at least one support at the first mounting surface comprises a flexible pad. Due to the flexibility of the pad, the first mounting surface, when pressed against its counterpart, conforms to the potentially rough or inclined surface of the shear web or the first half shell, respectively. Only a relatively thin layer of thermoplastic adhesive is thus needed to safely attach the first mounting surface, making the connection particularly fast and strong.

In an aspect of the invention, the flexible pad comprises a silicone or rubber material. These materials offer an excellent flexibility. In addition, they can be selected to be incompatible with the reactive adhesive, thereby preventing that the at least one support becomes inadvertently attached to the rotor blade by the reactive adhesive. This is of particular relevance if the first mounting surface shall be positioned at or close to one of the bonds formed by the reactive adhesive.

In an aspect of the invention, the at least one support comprises a heating device adapted for heating of the first mounting surface. As explained earlier, the thermoplastic adhesive may be applied to the first mounting surface and/or to its counterpart in heated form, such as by a hot-melt glue gun. In addition or in the alternative, it is helpful to equip the at least one support with a suitable heating device adapted to heat the first mounting surface. This heating device can be operated to heat the thermoplastic adhesive before attaching the first mounting surface to its counterpart (should the thermoplastic adhesive be applied in solid form), to improve wetting of the first mounting surface by the thermoplastic adhesive, to maintain the temperature of the thermoplastic adhesive at a desired level during positioning of the various components, and/or to soften the thermoplastic adhesive once the at least one support shall be removed from the rotor blade. No matter for which of these purposes, it is an advantage to integrate a heating device into the at least one support, so that less additional equipment is needed for mounting and/or removing of the at least one support.

In an aspect of the invention, the heating device comprises a heating wire or a heating foil. The heating wire or the heating foil can be placed at or close to the first mounting surface. The heating wire or the heating foil can have a well-defined electric resistance, so that heating can be controlled by supplying an electric current to the heating device.

In an aspect of the invention, the heating wire or the heating foil is attached to or integrated into the flexible pad. In this way, the heating wire or the heating foil is placed right at or close to the first mounting surface, while it may be electrically and/or thermally isolated from the remainder of the at least one support.

In an aspect of the invention, the heating device comprises an electrical energy source. This source of electrical energy may in particular be a battery. The size of the source of electrical energy may be selected such that a desired number of heating cycles can be carried out without recharging of the battery. In any event, an electrical energy source integrated into the at least one support offers a compact solution which makes it easy to handle the at least one support.

In an aspect of the invention, the heating device comprises a control switch or a wired or wireless remote control unit. By means of the control switch, the wired or wireless remote control unit, the heating device can be activated and deactivated. It is also possible to integrate a control unit into the heating device controlling the temperature of the first mounting surface, in particular using a temperature sensor, so that the temperature of the first mounting surface may be set to a desired value, in particular to a temperature above the softening temperature of the thermoplastic adhesive. When using a remote control unit, it is particularly easy to control the heating device, which is important in particular when the at least one support is used in a relatively narrow region of the wind turbine rotor blade, for example close to the rotor blade's tip, which is not accessible for a person.

In an aspect of the invention, for attaching the first mounting surface to the shear web or to the first half shell, the thermoplastic adhesive is arranged at the mounting surface and heated with the heating device. Following this approach, the thermoplastic adhesive may be applied to the first mounting surface or to its counterpart as a layer of solid material, below the softening temperature, in particular in the form of a film or foil of the thermoplastic adhesive.

In an aspect of the invention, the heating device is operated so that the thermoplastic adhesive remains soft until the shear web has been adjusted in the defined position and the at least one support has been adjusted in the holding position. Maintaining the thermoplastic adhesive soft, corresponding to a temperature at or above the softening temperature, allows for adjusting of the three main components and the at least one support with regard to one another as long as necessary. Once the desired position is reached, the heating device can be deactivated, so that the thermoplastic adhesive cools down and solidifies quickly.

In an aspect of the invention, the heating device is operated to detach the first mounting surface from the shear web or from the first half shell. In this way, the heating device is used to detach the at least one support from the component to which it has been attached with the thermoplastic adhesive. This makes it easy to detach the at least one support at a desired point in time.

In an aspect of the invention, the at least one support comprises a holding block having the first mounting surface and a support surface, wherein, when the holding block holds the shear web in the defined position, the mounting surface is attached to the first half shell and the support surface is abutting a lateral side of the shear web. In this case, the at least one support essentially acts as a stopper for the shear web. The lateral side may be a lateral side of a mounting flange of the shear web, for example.

In an aspect of the invention, the at least one support comprises a strut having the first mounting surface and a second mounting surface, wherein, when the strut holds the shear web in the defined position, the first mounting surface is attached to the shear web and the second mounting surface is attached to the first half shell, or vice versa. With "or vice versa", it is meant that in the alternative, the first mounting surface is attached to the first half shell and the second mounting surface is attached to the shear web. Such a strut-like support can hold the shear web in place, in particular at an upper end in a distance from the first half shell. The second mounting surface may be attached to the first half shell by means of a thermoplastic adhesive as well. However, this is not necessary, because in some applications it is sufficient to place the second mounting surface on the first half shell, for example, and to obtain a locking engagement, if desired in combination with a slip-resistant surface at the first half shell or at the second mounting surface. One or both ends of the strut may comprise a hinged mounting section carrying one of the mounting surfaces, so that the mounting section may be inclined with reference to a mid section/a central axis of the strut in order to align the corresponding mounting surface to the surface of its counterpart.

In an aspect of the invention, for removing the at least one support, a pull element is attached to the at least one support, wherein the pull element is guided out of the wind turbine rotor blade and/or is guided to an accessible area within the wind turbine rotor blade. The pull element may be a wire or rope which can be pulled by hand out of the wind turbine rotor blade together with the at least one support to which it is attached. This makes it easy to remove the at least one support, even when the same is placed in a very narrow region of the wind turbine rotor blade's interior.

In the following, the invention is explained in further detail based on embodiments shown in drawings.
- Fig. 1: shows a wind turbine rotor blade during assembly in a cross-section,
- Fig. 2: shows a detail of Fig. 1 with a mounting section of a support,
- Fig. 3: shows another mounting section of a support,
- Fig. 4: shows a flexible pad with a heating wire, and
- Fig. 5: shows a detail of Fig. 1 with a holding block next to a shear web flange.

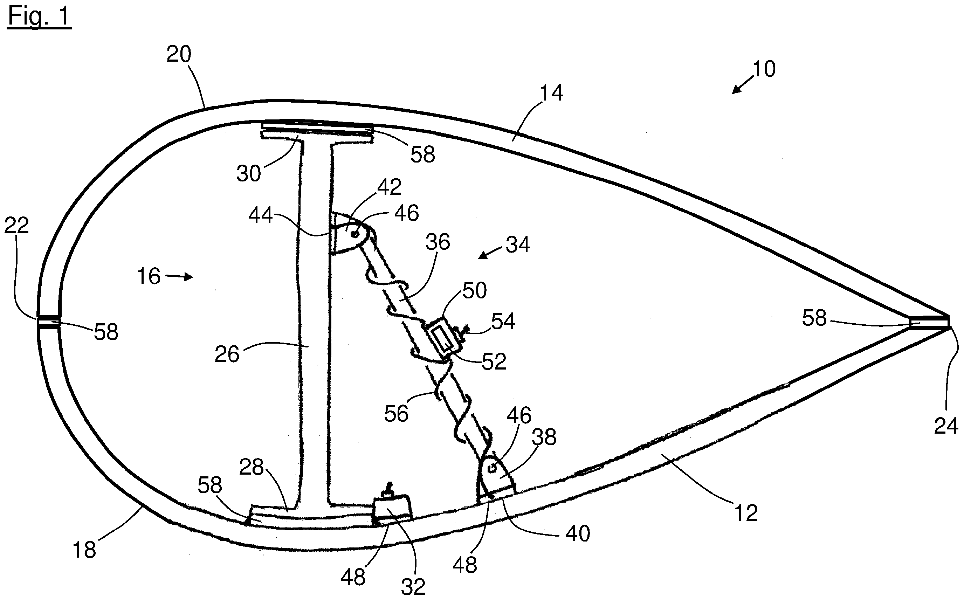

The wind turbine rotor blade 10 of Fig. 1 comprises three main components, namely a first half shell 12, a second half shell 14, and a shear web 16. The first half shell 12 includes an aerodynamic skin, the outer side of which forms a pressure side 18. The second half shell 14 includes an aerodynamic skin, the outer side of which forms a suction side 20 of the wind turbine rotor blade 10. In the chordwise direction, each of the half shells 12, 14 extends from a leading edge 22 to a trailing edge 24 of the wind turbine rotor blade 10.

Although not shown in the drawings, each half shell 12, 14 as an integral part includes a spar cap, which is arranged at an inner side of the respective half shell 12, 14 at a chordwise position corresponding to the shear web 16. Each of the half shells 12, 14 is still arranged in a specific mould (not shown) in which it has been manufactured using a vacuum infusion process.

The shear web 16 extends over a larger part of the length of the wind turbine rotor blade 10. The shear web 16 is I-shaped in cross-section. It comprises a plate-shaped section 26 arranged in a largely vertical direction. At the end of the plate-shaped section 26 facing the first half shell 12, the shear web 16 comprises a mounting flange 28 with two sections, one extending from the plate-shaped section 26 in the direction towards the leading edge 22, the other one extending from the plate-shaped section 26 in the direction towards the trailing edge 24. The shear web 16 comprises a similar mounting flange 30 at the other end of the plate-shaped section 26, facing the second half shell 14.

As can be seen in the drawing, the shear web 16 has been adjusted into its desired position with reference to the first half shell 12, previously referred to as defined position. This has been done with a shear web positioning device not shown in the drawings.

Figure 1 shows two supports 32, 34 for holding the shear web 16 in the defined position. They have been attached to the shear web 16 respectively to the first half shell 12 before the shear web positioning device has been removed, and before the second half shell 14 has been placed in its mounting position shown in Fig. 1.

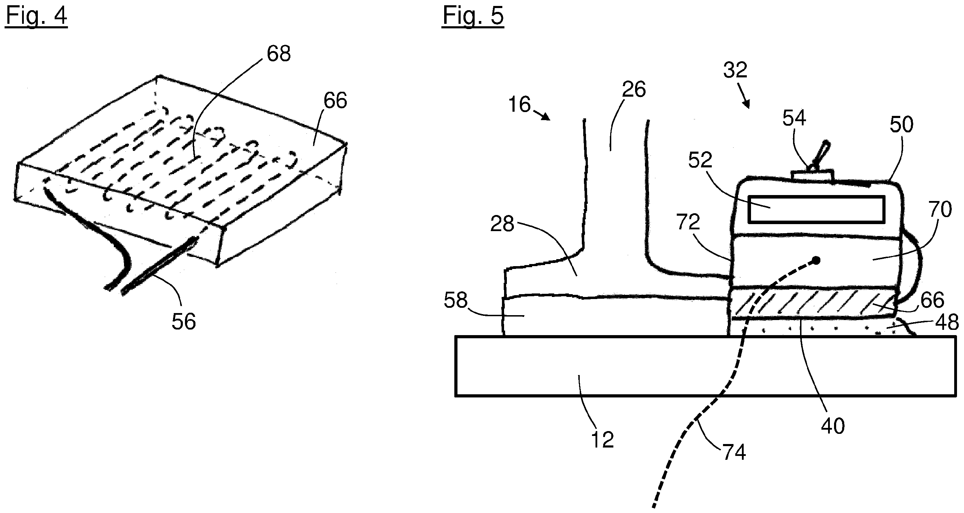

A first support 32 comprises a holding block explained in greater detail below with reference to Fig. 5. A second support 34 shown in Fig. 1 comprises an elongate strut 36. At a lower end of the strut 36, the second support 34 has a hinged mounting section 38 comprising a first mounting surface 40. At an upper end of the strut 36, the second support 34 has a hinged mounting section 42 comprising a second mounting surface 44. The mounting sections 38, 42 are each connected to the strut 36 via a hinge axis 46, so that it is possible to align the orientation of the first mounting surface 40 and the second mounting surface 44 with the orientation of counterpart surfaces to which they shall be attached.

With regard to the mounting section 38, it can be seen in Fig. 1 that the first mounting surface 40 thereof has been aligned to a surface of the inner side of the first half shell 12 arranged in a distance from the shear web 16. Between this surface of the first half shell 12 and the adjacent first mounting surface 40, a thermoplastic adhesive 48 is provided, so that the mounting section 38 is safely attached to the first half shell 12. With regard to the mounting section 42, the second mounting surface 44 thereof has been aligned to a surface of the plate-shaped section 26 of the shear web 16. Between second mounting surface 44 and the shear web 16, a thermoplastic adhesive 48 is provided, so that the mounting section 42 is safely attached to the shear web 16.

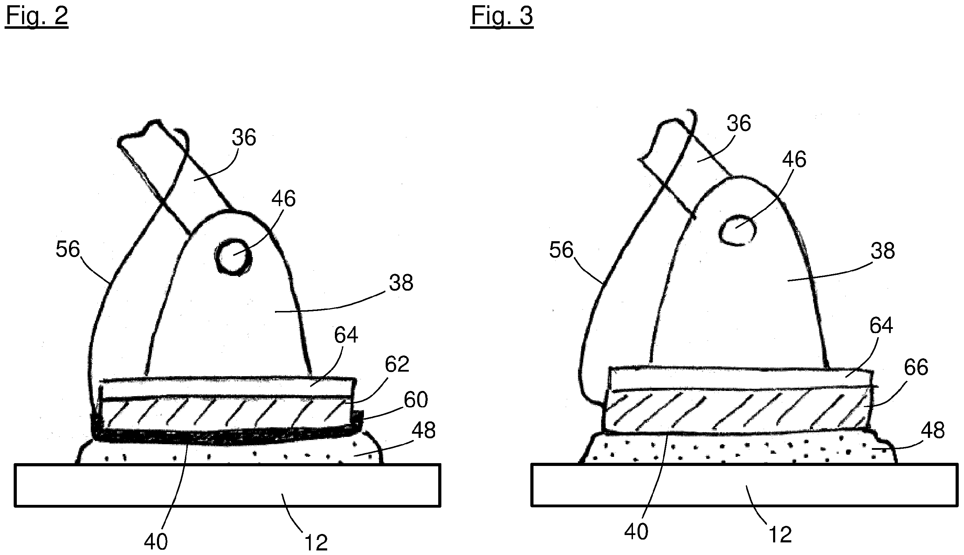

The second support 34 further includes a heating device with a control unit 50 comprising an electrical energy source 52 and a control switch 54. The control unit 50 is affixed to the strut 36 of the second support 34, and is electrically connected via a cable 56 to heating foils arranged at the first mounting surface 40 and the second mounting surface 44 (see Fig. 2).

In accordance with the method of assembling the wind turbine rotor blade, a reactive adhesive 58 has been provided between the first half shell 12 and mounting flange 28 of the shear web 16, between the second half shell 14 and the mounting flange 30 of the shear web 16, and between the edges of the first half shell 12 and the edges of the second half shell 14 at the leading edge 22 and at the trailing edge 24 of the wind turbine blade 10. Once the reactive adhesive 58 has cured at least partly, the three main components will be safely held in their relative positions shown in Fig. 1 by the bonds formed by the reactive adhesive 58, so that the supports 32, 34 can be detached from the shear web 16 and the first half shell 12 by heating the thermoplastic adhesive 48, and then removed from the wind turbine rotor blade 10.

Figure 2 shows the mounting section 38 in greater detail, with a bottom end of the strut 36 connected to the mounting section 38 via hinge axis 46. One can see a layer of thermoplastic adhesive 48 arranged on the contact surface of the first half shell 12. Next to the layer of thermoplastic adhesive 48, the mounting section 38 comprises a heating foil 60 to which an electric current is supplied through cable 56. On top of the heating foil, the mounting section 38 comprises a flexible pad 62 made of a rubber material, which is attached to a base plate 64 of the mounting section 38. The first mounting surface 40 is located at the bottom side of the heating foil 60.

In the alternative shown in Fig. 3, the mounting section 38 comprises a base plate 64 and a flexible pad 66 connected to the base plate 64 as well. However, instead of a heating foil 60, the heating device comprises a heating wire 68 (see Fig. 4) integrated into the flexible pad 66 which consists of a silicone material. When a heating current is supplied via cable 56, the flexible pad 66 is heated, thereby softening the thermoplastic adhesive 48 arranged directly at the first mounting surface 40 formed by the lower surface of the flexible pad 66.

Figure 4 illustrates the heating wire 68 arranged in the block-shaped flexible pad 66 in a meandering pattern. Two ends of the heating wire 68 are connected to cable 56.

Figure 5 shows the application of first support 32 of Fig. 1 in more detail. One easily recognises the shear web 16 with its plate-shaped section 26 and lower mounting flange 28 to be adhered to the first half shell 12 by means of reactive adhesive 58. Next to the lateral side of the mounting flange 28, the first support 32 is arranged. It comprises a holding block 70 with a lateral support surface 72, which abuts on the lateral side of the mounting flange 28. In this way, the first support 32 acts as a stopper preventing the mounting flange 28 from slipping to the right of Fig. 5, i.e. in a direction towards the trailing edge 24. The holding block 70 also comprises a flexible pad 66 similar to the one shown in Fig. 4, which has the first mounting surface 40 at its bottom, and a heating device with a control unit 50, an electrical energy source 52, and a control switch 54.

In order to simplify the step of removing the second support 34 from the wind turbine rotor blade 10, a pull element, in particular a pull wire 74, is attached to the second support 34 and guided out of the wind turbine rotor blade 10.

### List of reference numerals:

- 10: wind turbine rotor blade
- 12: first half shell
- 14: second half shell
- 16: shear web
- 18: pressure side
- 20: suction side
- 22: leading edge
- 24: trailing edge
- 26: plate-shaped section
- 28: mounting flange
- 30: mounting flange
- 32: first support
- 34: second support
- 36: strut
- 38: mounting section
- 40: first mounting surface
- 42: mounting section
- 44: second mounting surface
- 46: hinge axis
- 48: thermoplastic adhesive
- 50: control unit
- 52: electrical energy source
- 54: control switch
- 56: cable
- 58: reactive adhesive
- 60: heating foil
- 62: flexible pad
- 64: base plate
- 66: flexible pad
- 68: heating wire
- 70: holding block
- 72: support surface
- 74: pull wire

## Claims

1. A method of assembling a wind turbine rotor blade (10), the method comprising the following steps:
• providing a first half shell (12), a second half shell (14), and a shear web (16),
• providing a reactive adhesive on a contact surface between the first half shell (12) and the shear web (16),
• placing the shear web (16) in a defined position with reference to the first half shell (14),
• arranging at least one support (32, 34) in a holding position in which it is holding the shear web (16) in the defined position,
• providing a reactive adhesive (58) on contact surfaces between the first half shell (12) and the second half shell (14), and between the second half shell (14) and the shear web (16),
• placing the second half shell (14) in a mounting position,
• curing the reactive adhesive (58),
• removing the at least one support (32, 34), **characterised in that**
• for holding the shear web (16) in the defined position, the at least one support (32, 34) has a first mounting surface (40) which is attached to the shear web (16) or to the first half shell (12) by a thermoplastic adhesive (48), and
• for removing the at least one support (32, 34), the thermoplastic adhesive (48) is heated to a temperature which is equal to or higher than a softening temperature of the thermoplastic adhesive (48).

2. The method of claim 1, **characterised in that** for curing the reactive adhesive (58), the wind turbine rotor blade (10) is heated to a curing temperature which is equal to or higher than the softening temperature of the thermoplastic adhesive (48).

3. The method of claim 1 or 2, **characterised in that** the at least one support (32, 34) at the first mounting surface (40) comprises a flexible pad (62, 66).

4. The method of claim 3, **characterised in that** the flexible pad (62, 66) comprises a silicone or rubber material.

5. The method of any of the claims 1 to 4, **characterised in that** the at least one support (32, 34) comprises a heating device adapted for heating of the first mounting surface (40).

6. The method of claim 5, **characterised in that** the heating device comprises a heating wire (68) or a heating foil (60).

7. The method of claim 6, **characterised in that** the heating wire (68) or the heating foil (60) is attached to or integrated into the flexible pad (62, 66).

8. The method of any of the claims 5 to 7, **characterised in that** the heating device comprises an electrical energy source (52).

9. The method of the claims 5 to 8, **characterised in that** the heating device comprises a control unit with a control switch (54) or a wired or wireless remote control unit.

10. The method of any of the claims 5 to 9, **characterised in that** for attaching the first mounting surface (40) to the shear web (16) or to the first half shell (12), the thermoplastic adhesive (48) is arranged at the mounting surface (40) and heated with the heating device.

11. The method of any of the claims 5 to 10, **characterised in that** the heating device is operated so that the thermoplastic adhesive (48) remains soft until the shear web (16) has been adjusted into the defined position and the at least one support (32, 34) has been adjusted into the holding position.

12. The method of any of the claims 5 to 11, **characterised in that** the heating device is operated to detach the first mounting surface (40) from the shear web (16) or from the first half shell (12).

13. The method of any of the claims 1 to 12, **characterised in that** the at least one support (32) comprises a holding block (70) having the first mounting surface (40) and a support surface (72), wherein, when the holding block (70) holds the shear web (16) in the defined position, the mounting surface (40) is attached to the first half shell (12) and the support surface (72) is abutting a lateral side of the shear web (16).

14. The method of any of the claims 1 to 12, **characterised in that** the at least one support (34) comprises a strut (36) having the first mounting surface (40) and a second mounting surface (44), wherein, when the strut (36) holds the shear web (16) in the defined position, the first mounting surface (40) is attached to the shear web (16) and the second mounting surface (40) is attached to the first half shell (12), or vice versa.

15. The method of any of the claims 1 to 14, **characterised in that** for removing the at least one support (32, 34), a pull element is attached to the at least one support (32, 34), wherein the pull element is guided out of the wind turbine rotor blade (10) and/or is guided to an accessible area within the wind turbine rotor blade (10).

## Patentansprüche

1. Verfahren zur Fertigung eines Windenergieanlagenrotorblatts (10), wobei das Verfahren die folgenden Schritte umfasst:
• Bereitstellen einer ersten Halbschale (12), einer zweiten Halbschale (14) und eines Scherstegs (16),
• Bereitstellen eines reaktiven Klebstoffs auf einer Kontaktfläche zwischen der ersten Halbschale (12) und dem Schersteg (16),
• Anordnen des Scherstegs (16) in einer definierten Position in Bezug auf die erste Halbschale (14),
• Anordnen mindestens einer Stütze (32, 34) in einer Halteposition, in welcher sie den Schersteg (16) in der definierten Position hält,
• Bereitstellen eines reaktiven Klebstoffs (58) auf Kontaktflächen zwischen der ersten Halbschale (12) und der zweiten Halbschale (14) sowie zwischen der zweiten Halbschale (14) und dem Schersteg (16),
• Platzieren der zweiten Halbschale (14) in einer Montageposition,
• Aushärten des reaktiven Klebstoffs (58),
• Entfernen der mindestens einen Stütze (32, 34), **dadurch gekennzeichnet, dass**
• die mindestens eine Stütze (32, 34) zum Halten des Scherstegs (16) in der definierten Position eine erste Montagefläche (40) aufweist, die an dem Schersteg (16) oder an der ersten Halbschale (12) mittels eines thermoplastischen Klebstoffs (48) befestigt ist, und
• zum Entfernen der mindestens einen Stütze (32, 34) der thermoplastische Klebstoff (48) auf eine Temperatur erwärmt wird, die gleich oder höher als eine Erweichungstemperatur des thermoplastischen Klebstoffs (48) ist.

2. Verfahren nach Anspruch 1, **dadurch gekennzeichnet, dass** zum Aushärten des reaktiven Klebstoffs (58) das Windenergieanlagenrotorblatt (10) auf eine Aushärtetemperatur erhitzt wird, die gleich oder höher als die Erweichungstemperatur des thermoplastischen Klebstoffs (48) ist.

3. Verfahren nach Anspruch 1 oder 2, **dadurch gekennzeichnet, dass** die mindestens eine Stütze (32, 34) an der ersten Montagefläche (40) eine flexible Unterlage (62, 66) umfasst.

4. Verfahren nach Anspruch 3, **dadurch gekennzeichnet, dass** die flexible Unterlage (62, 66) ein Silikon- oder Gummimaterial umfasst.

5. Verfahren nach einem der Ansprüche 1 bis 4, **dadurch gekennzeichnet, dass** die mindestens eine Stütze (32, 34) eine Heizvorrichtung aufweist, die zur Beheizung der ersten Montagefläche (40) geeignet ist.

6. Verfahren nach Anspruch 5, **dadurch gekennzeichnet, dass** die Heizvorrichtung einen Heizdraht (68) oder eine Heizfolie (60) umfasst.

7. Verfahren nach Anspruch 6, **dadurch gekennzeichnet, dass** der Heizdraht (68) oder die Heizfolie (60) an der flexiblen Unterlage (62, 66) befestigt oder darin integriert ist.

8. Verfahren nach einem der Ansprüche 5 bis 7, **dadurch gekennzeichnet, dass** die Heizeinrichtung eine elektrische Energiequelle (52) umfasst.

9. Verfahren nach einem der Ansprüche 5 bis 8, **dadurch gekennzeichnet, dass** die Heizeinrichtung eine Steuereinheit mit einem Steuerschalter (54) oder eine Kabelfernsteuerung oder eine kabellose Fernsteuerung umfasst.

10. Verfahren nach einem der Ansprüche 5 bis 9, **dadurch gekennzeichnet, dass** der thermoplastische Klebstoff (48) zum Befestigen der ersten Montagefläche (40) an dem Schersteg (16) oder an der ersten Halbschale (12) an der Montagefläche (40) angeordnet und mit der Heizeinrichtung erwärmt wird.

11. Verfahren nach einem der Ansprüche 5 bis 10, **dadurch gekennzeichnet, dass** die Heizeinrichtung so betrieben wird, dass der thermoplastische Klebstoff (48) weich bleibt bis der Schersteg (16) in der vorbestimmten Position angeordnet ist und die mindestens eine Stütze (32, 34) in der Halteposition angeordnet ist.

12. Verfahren nach einem der Ansprüche 5 bis 11, **dadurch gekennzeichnet, dass** die Heizeinrichtung betrieben wird um die erste Montagefläche (40) von dem Schersteg (16) oder der ersten Halbschale (12) zu lösen.

13. Verfahren nach einem der Ansprüche 1 bis 12, **dadurch gekennzeichnet, dass** die mindestens eine Stütze (32) einen Halteblock (70) umfasst, der eine erste Montagefläche (40) und eine Stützfläche (72) besitzt, wobei, wenn der Halteblock (70) den Schersteg (16) in der vorbestimmten Position hält, die Montagefläche (40) an der ersten Halbschale (12) befestigt ist und die Stützfläche (72) an einer Seitenfläche des Scherstegs (16) anliegt.

14. Verfahren nach einem der Ansprüche 1 bis 12, **dadurch gekennzeichnet, dass** die mindestens eine Stütze (34) eine Strebe (36) umfasst, die eine erste Montagefläche (40) und eine zweite Montagefläche (44) besitzt, wobei, wenn die Strebe (36) den Schersteg (16) in der vorbestimmten Position hält, die erste Montagefläche (40) an dem Schersteg (16) befestigt ist und die zweite Montagefläche (44) an der ersten Halbschale (12) befestigt ist, oder umgekehrt.

15. Verfahren nach einem der Ansprüche 1 bis 14, **dadurch gekennzeichnet, dass** zum Entfernen der mindestens einen Stütze (32, 34) ein Zugelement an der mindestens einen Stütze (32, 34) befestigt ist, wobei das Zugelement aus dem Windenergieanlagenrotorblatt (10) herausgeführt ist und/oder in einen zugänglichen Bereich innerhalb des Windenergieanlagenrotorblatts (10) geführt ist.

## Revendications

1. Procédé de montage de pale de rotor d'éolienne (10), le procédé comprenant les étapes suivantes :
• mise à disposition d'une première demi-coque (12), d'une deuxième demi-coque (14), et une bande de cisaillement (16),
• mise à disposition d'un agent adhésif réactif sur une surface de contact entre la première demi-coque (12) et la bande de cisaillement (16),
• disposition de la bande de cisaillement (16) dans une position définie par rapport à la première demi-coque (14),
• agencement d'au moins un support (32, 34) dans une position de maintien dans laquelle celui-ci maintient la bande de cisaillement (16) dans la position définie,
• mise à disposition d'un agent adhésif réactif (58) sur des surfaces de contact entre la première demi-coque (12) et la deuxième demi-coque (14), et entre la deuxième demi-coque (14) et la bande de cisaillement (16),
• disposition de la deuxième demi-coque (14) dans une position de montage,
• durcissement de l'agent adhésif réactif (58),
• retrait de l'au moins un support (32, 34), **caractérisé en ce que**
• pour maintenir la bande de cisaillement (16) dans la position définie, l'au moins un support (32, 34) présente une première surface de montage (40) fixée à la bande de cisaillement (16) ou à la première demi-coque (12) par un agent adhésif thermoplastique (48), et
• pour retirer l'au moins un support (32, 34), l'agent adhésif thermoplastique (48) est chauffé à une température égale ou supérieure à une température de ramollissement de l'agent adhésif thermoplastique (48).

2. Procédé selon la revendication 1, **caractérisé en ce que** pour le durcissement de l'agent adhésif réactif (58), la pale de rotor d'éolienne (10) est chauffée à une température de durcissement égale ou supérieure à la température de ramollissement de l'agent adhésif thermoplastique (48).

3. Procédé selon la revendication 1 ou 2, **caractérisé en ce que** l'au moins un support (32, 34) sur la première surface de montage (40) comprend un coussinet souple (62, 66).

4. Procédé selon la revendication 3, **caractérisé en ce que** le coussinet souple (62, 66) comprend un matériau en silicone ou en caoutchouc.

5. Procédé selon l'une quelconque des revendications 1 à 4, **caractérisé en ce que** l'au moins un support (32, 34) comprend un dispositif de chauffage adapté pour chauffer la première surface de montage (40).

6. Procédé selon la revendication 5, **caractérisé en ce que** le dispositif de chauffage comprend un fil chauffant (68) ou une feuille chauffante (60).

7. Procédé selon la revendication 6, **caractérisé en ce que** le fil chauffant (68) ou la feuille chauffante (60) est fixé(e) sur ou intégré dans le coussinet souple (62, 66).

8. Procédé selon l'une quelconque des revendications 5 à 7, **caractérisé en ce que** le dispositif de chauffage comprend une source d'énergie électrique (52).

9. Procédé selon les revendications 5 à 8, **caractérisé en ce que** le dispositif de chauffage comprend une unité de commande avec un commutateur de commande (54) ou une unité de commande à distance filaire ou sans fil.

10. Procédé selon l'une quelconque des revendications 5 à 9, **caractérisé en ce que** pour la fixation de la première surface de montage (40) à la bande de cisaillement (16) ou à la première demi-coque (12), l'agent adhésif thermoplastique (48) est disposé sur le surface de montage (40) et chauffé avec le dispositif de chauffage.

11. Procédé selon l'une quelconque des revendications 5 à 10, **caractérisé en ce que** le dispositif de chauffage est actionné de manière à ce que l'agent adhésif thermoplastique (48) reste souple jusqu'à l'ajustement de la bande de cisaillement (16) dans la position définie et l'ajustement de l'au moins un support (32, 34) dans la position de maintien.

12. Procédé selon l'une quelconque des revendications 5 à 11, **caractérisé en ce que** le dispositif de chauffage est actionné de manière à détacher la première surface de montage (40) de la bande de cisaillement (16) ou de la première demi-coque (12).

13. Procédé selon l'une quelconque des revendications 1 à 12, **caractérisé en ce que** l'au moins un support (32) comprend un bloc de maintien (70) présentant la première surface de montage (40) et une surface de support (72), dans lequel, lorsque le bloc de maintien (70) maintient la bande de cisaillement (16) dans la position définie, la surface de montage (40) est fixée à la première demi-coque (12) et la surface de support (72) bute contre un côté latéral de la bande de cisaillement (16).

14. Procédé selon l'une quelconque des revendications 1 à 12, **caractérisé en ce que** l'au moins un support (34) comprend une entretoise (36) présentant la première surface de montage (40) et une deuxième surface de montage (44), dans lequel, lorsque l'entretoise (36) maintient la bande de cisaillement (16) dans la position définie, la première surface de montage (40) est fixée à la bande de cisaillement (16) et la deuxième surface de montage (40) est fixée à la première demi-coque (12), ou vice versa.

15. Procédé selon l'une quelconque des revendications 1 à 14, **caractérisé en ce que** pour le retrait de l'au moins un support (32, 34), un élément de traction est fixé à l'au moins un support (32, 34), dans lequel l'élément de traction est guidé hors de la pale de rotor d'éolienne (10) et/ou guidé vers une zone accessible dans la pale de rotor d'éolienne (10).
